# EUROPEAN PATENT SPECIFICATION

(11) **EP 0 504 731 B1**
(45) Date of publication and mention of the grant of the patent: **15.12.1999**
(21) Application number: 92104225.5
(22) Date of filing: 11.03.1992
(51) Int. Cl.: G01L 5/00, G01L 5/20, B60T 8/66, B60T 8/00

(54) **Device for measuring forces acting on a wheel**
Vorrichtung zur Messung von Kräften auf ein Rad
Dispositif pour mesurer la force agissant sur une roue

(30) Priority: 19.03.1991 JP 13084091
(43) Date of publication of application: 23.09.1992
(60) Divisional application: 97116804.2
(73) Proprietor: JAPAN ELECTRONICS INDUSTRY, LTD., Ikuno-ku Osaka (JP)
(72) Inventor: Miyazaki, Nagao, c/o Japan Electronics Industry, Ikuno-ku, Osaka (JP)
(74) Representative: Popp, Eugen, Dr.

(56) References cited:
- EP-A- 0 154 728
- EP-A- 0 175 917
- EP-A- 0 363 570
- US-A- 4 429 579
- US-A- 4 858 475
- SOVIET INVENTIONS ILLUSTRATED Section EI, Week 8502, 20 February 1985 Derwent Publications Ltd., London, GB; Class S02, AN 85-010224
- SOVIET PATENTS ABSTRACTS Section EI, Week 9013, 9 May 1990 Derwent Publications Ltd., London, GB; Class S02, AN 90-097820

## Description

The present invention relates to a device for measuring forces on a wheel for detecting road surface frictional force, vertical drag, road surface friction coefficient, etc. The device can be a constituent element of a brake system with skid control for preventing lock (seizure) of the wheels of a vehicle on sudden stops or a traction control system for preventing excessive slip of the wheels at acceleration.

The European patent application EP-A 0 154 728 discloses a load detector which may be mounted in a load carrying element of a vehicle. Stress detection sensors having strain gauges mounted thereon are disposed in holes located along the neutral axis of the loaded element. Signal processing means are connected to the stress detection sensors to determine the load applied to the element.

The antilock brake system (ABS) of a conventional vehicle such as an automobile generally employs a principle of automatically controlling brake action, according to chassis speed and wheel speed, in such a manner that slip ratio falls into a certain range (cf. JP-B-59-30585 and JP-A-60-61354). The relationship between road surface friction coefficient and slip ratio is variable according to road surface conditions. Therefore, in the above-mentioned system, braking force may not be maximum depending on road surface conditions and a minimum braking distance cannot be obtained in such a case. Furthermore, since the chassis speed is estimated from the wheel speed, control of the slip ratio is deficient in precision. Exact determination of the chassis speed requires a complicated apparatus such as a ground-relative speed sensor (cf. JP-A-63-64861) or a chassis deceleration sensor (cf. JP-A-63-170157).

There was accordingly proposed an ABS which takes into account road surface frictional force or road surface friction coefficient as a measured value. In the system described in JP-A-63-25169, the torque (tire torque) of the road surface frictional force acting on the wheels is obtained by observing the wheel angular acceleration speed and the brake fluid pressure. The beginning of decline in the tire torque while the brake fluid pressure increases is adopted as one of the criteria for the assessment of wheel conditions just before the wheels are locked. However, in this system, the tire torque is indirectly determined by arithmetic operations of the wheel angular acceleration speed and the brake fluid pressure, while the wheel inertia efficiency and the braking efficiency of a brake are indefinite constants. Therefore, the precision of the calculated values is not sufficiently high.

Regarding a traction control system, the conventional apparatus also detects the wheel slip at the time of acceleration by measuring wheel speed like the ABS. In this case, too, there is the same problem as in the ABS wherein controls are executed based on wheel speed.

Therefore, constituent elements of these new ABS or traction control system, there is a demand for an apparatus for measuring dynamic quantities relating to the interaction between road surface and wheels such as road surface frictional force, vertical drag and road surface friction coefficient.

An object of the present invention to meet the above-mentioned demand is to provide an improved device for measuring the forces on wheels for detecting road surface frictional force, vertical drag and road surface friction coefficient.

The present invention provides a device measuring wheel forces as defined in claim 1.

According to the device, the stress of the axle due to wheel action force is detected by a stress detection sensor. The stress is proportional to the wheel action force and, therefore, the stress detection sensor detects the wheel action force through the stress. Since the stress detection sensor is embedded in the axle, interferences to sensor output signals from wheel action forces other than target wheel action force can be decreased and, moreover, the sensor can be protected against the external environment. Furthermore, since the detection signal from the stress detection sensor is processed by the signal processing circuit, interferences from wheel action forces other than the specific wheel action force subjected to measurement can be further decreased.

According to the present invention, the hole in the axle is disposed in alignment with the stress neutral line of the axle. According to such an alignment, the interferences to the sensor output signals from the brake torque, side force, etc. acting on the wheel can be effectively decreased.

Preferably, the stress detection sensor can be disposed on the centerline of the axle, whereby the interferences to the sensor output signal from the brake torque and side forces acting on the wheel can be decreased.

In an embodiment, the detection sensor and the signal processing circuit can be securely installed together in the hole of the axle. Therefore, a high signal-to-noise ratio can be achieved in the output signal from the signal processing circuit.

Such devices may be installed in each of the holes formed in horizontal and vertical directions in the axle and a signal processing circuit may be adapted to process a detection signal from each of the stress detection sensors. In this arrangement, road surface frictional force and vertical drag acting on a wheel can be measured by the stress detection sensors and the detection signal from each of the stress detection sensors can be processed in the signal processing circuit to measure road surface friction coefficient which is defined as the ratio of road surface frictional force and vertical drag.

The stress detection sensor is constructed as an integral unit comprising strain gauges mounted on a cubic plastic base. In this arrangement, the stress detection sensors can measure road surface frictional force and vertical drag acting on a wheel at generally the same position in the axle. Thus, the stress detection sensors can be installed in a position in the axle where interferences to two measured values from wheel action forces other than those wheel action forces can be simultaneously decreased.

The strain gauges of each of the stress detection sensors can be securely mounted in the hole of the axle in an orientation of about 45 degrees with respect to the horizontal and vertical stress center axes of the axle. Therefore, the respective sensors can measure road surface frictional force and vertical drag acting on the wheel, with interferences from other wheel action forces being decreased.

The signal processing circuit can be constituted of a sensor bridge circuit for stress detection and an amplification circuit. In this arrangement, interferences from wheel action forces other than a specific wheel action force can be effectively eliminated. In addition, the sensitivity of the stress detection sensor can be increased so that a sufficiently large output of the measured wheel action force can be obtained.

Alternatively, the signal processing circuit can consist of a sensor bridge circuit for stress detection, an amplification circuit and an operational circuit. In this arrangement, interferences from wheel action forces other than a specific wheel action force can be effectively eliminated and the sensitivity of the stress detection sensor be increased, with the result that it is not only possible to obtain a measured value of the desired wheel action force as a sufficiently large output but also possible to determine road surface friction coefficient which is defined as the ratio of road surface frictional force and vertical drag.

In any of the wheel action measuring devices as mentioned above, the signal processing circuit can consist of a sensor bridge circuit for stress detection.

The effects of the present invention are as follows.

With the device of the present invention, road surface frictional force, vertical drag, road surface friction coefficient, side force, brake torque and drive torque can be easily measured. When the device is utilized in an antilock brake system, the braking distance can be reduced as much as possible regardless of road surface conditions and, at the same time, the object of antilock can be accomplished. Moreover, there is no need for a complicated apparatus for measuring the chassis speed. In a traction control device, the acceleration distance can be reduced as mush as possible regardless of road surface conditions. Thus, the present invention brings forth remarkable improvements in the performance of a vehicle antilock brake system and a traction control device.

Fig. 1 is a partial perspective view showing an embodiment of a device for measuring forces on a wheel.

Fig. 2 is a partial perspective view showing a stress detection sensor.

Fig. 3 is a diagrammatic view showing a signal processing circuit.

Fig. 4 is a partial perspective view showing another stress detection sensor.

Fig. 5 is a diagrammatic view showing another signal processing circuit.

Fig. 6 is a partial perspective view showing another stress detection sensor.

Fig. 7 is a perspective interior view showing another embodiment of a device for measuring stress of a structure.

Fig. 8 is a perspective interior view showing still another embodiment of a device for measuring stress of a structure.

Fig. 9 is a perspective view showing another embodiment of a stress detection sensor equipped with strain gauges.

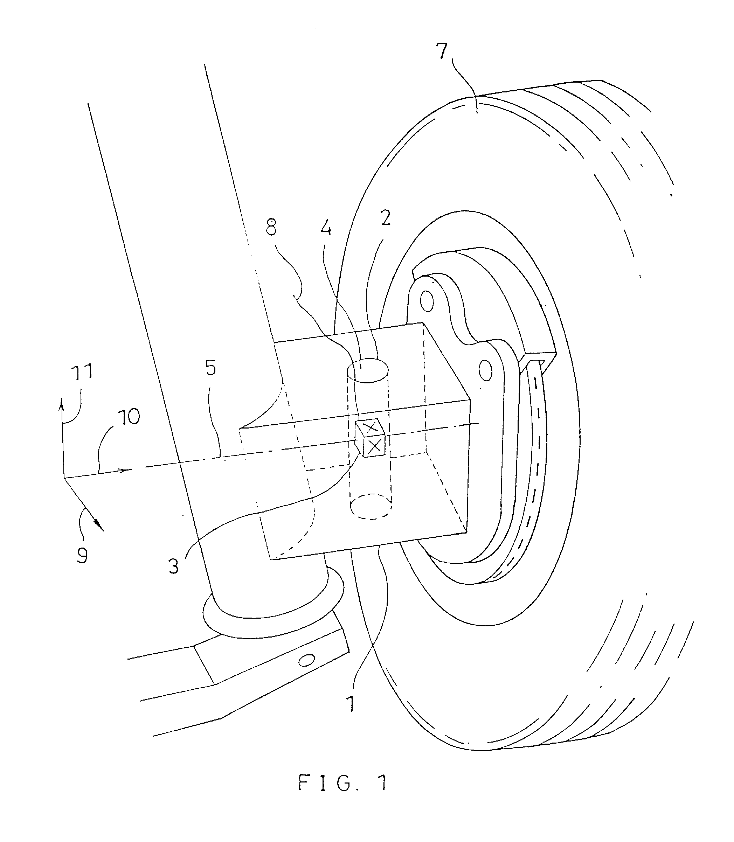

The following Figs. 1 to 6 show arrangements useful in understanding the invention, while they are not part of the invention.

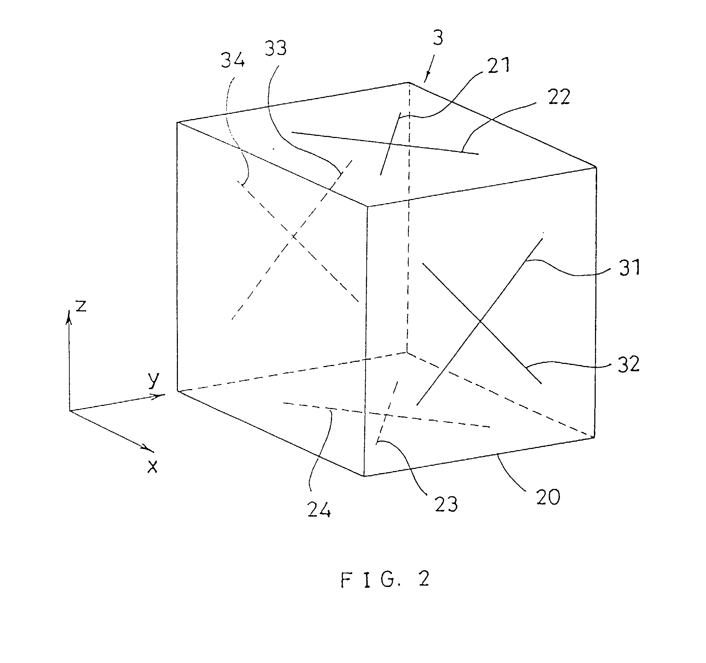

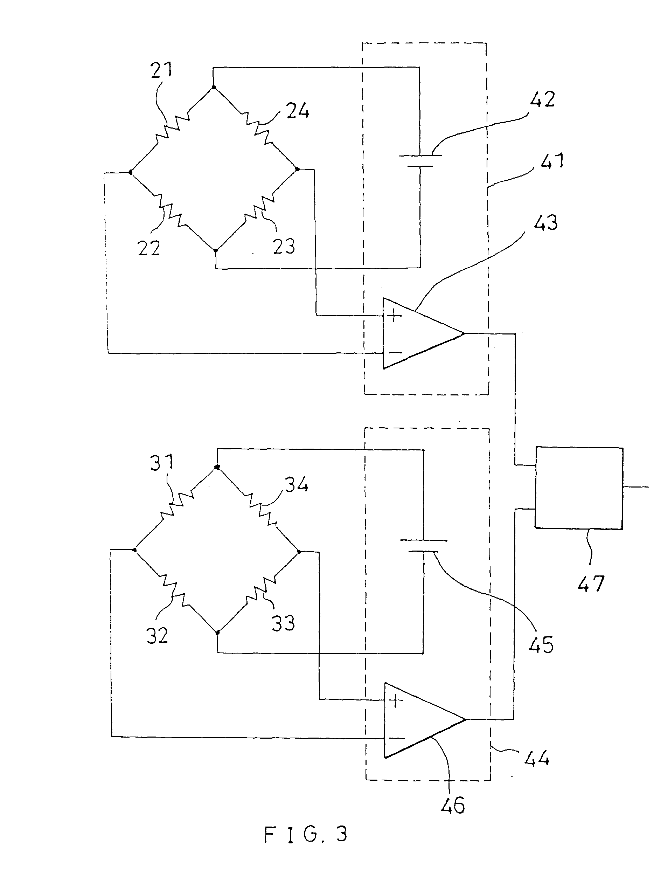

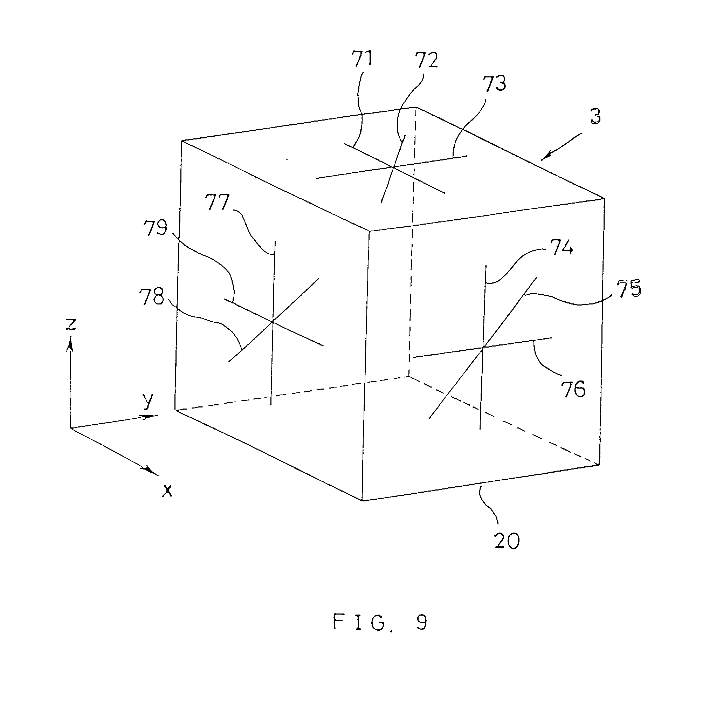

Fig. 1 shows installation state of a stress detection sensor. Fig. 2 shows the stress detection sensor and Fig. 3 shows a signal processing circuit. As an example, there is shown a case in which the stress detection sensor is mounted in an axle of a driven wheel of a car having strut type suspension structure which is often used for automobiles. From the top to bottom of an axle 1 (a knuckle in this example), a hole 2 is formed along a direction 11 perpendicular to a road surface and intersecting an axle centerline (a stress neutral line) of the axle. The diameter of the hole 2 may, for example, be about 5 mm to about 10 mm. Here, the axle centerline (a stress neutral line) means the centerline of bending deformation generated in the axle 1 by road surface frictional force, vertical drag and side force acting on the wheel rotating about a spindle (the line on which neither tensile strain nor compressive strain occurs due to bending deformation), or the centerline of torsional deformation which is generated in the axle 1 by brake torque on actuation of a brake (the line on which no shear strain is generated by torsional deformation). These centerlines approximately coincide with the centerline of a spindle (a center axis 5 of the axle). A stress detection sensor 3 is inserted into the hole 2. As shown in Fig. 2, the stress detection sensor 3 comprises a cubic base 2 and strain measuring means mounted thereon. The strain measuring means are strain gauges. The strain gauges according to the invention are located on different surfaces as will be discussed below in connection with Fig. 9. Strain gauges 21-24 and 31-34 in Fig.2 are represented by lines on respective planes of the base 20. The base 20 may for example be made of a plastic material such as epoxy resin. The strain gauges 21-24 and 31-34 are attached to the base 20 by bonding to the respective surfaces of the base 20 with an adhesive or being embedded in the surface regions of the base 20. Each of the strain gauges 21-24 and 31-34 is preferably mounted at an angle of 45 degrees with respect to Y-axis. The stress detection sensor 3 is inserted into the hole 2 and installed on the axle centerline (the center axis 5 of the axle). X, Y and Z axes are established in coincidence with the direction of advance of the vehicle 9, the direction of an axle 10 and a vertical direction 11, respectively. A top surface of the stress detection sensor (one side whose normal direction is Z direction) is preferably above the centerline of the axle, a bottom surface of the sensor (another side whose normal direction is Z direction) is preferably below the centerline of the axle. The magnitude of the tensile or the compressive strain due to the bending deformation generated by the road surface frictional force, vertical drag and side force acting on the wheel is preferably the same on the two surfaces of the stress detection sensor or the magnitude of shear strain associated with torsional deformation generated by brake torque on actuation of the brake is preferably the same on both surfaces. This is of increased significance when the distance between the top and bottom surfaces is large. It is also preferable that a front surface (one side whose normal direction is X direction) and a rear surface (another side whose normal direction is X direction) of the stress detection sensor be disposed on each side of the axle centerline respectively and the strain due to bending deflection or torsional deformation be the same on both surfaces. The hole 2 is filled with a filler 4 (an example of spacer means). The filler 4 is preferably of the same material as the stress detection sensor 3. The filler 4 fills up the gap around the stress detection sensor 3 in order to securely lock the sensor in the hole 2. By the above-mentioned procedure, the strain gauges 21-24 and 31-34 are embedded securely in the predetermined position and in the predetermined orientation in the hole 2.

Like a signal processing circuit shown in Fig. 3, the set of strain gauges 21, 22, 23 and 24 and the set of 31, 32, 33 and 34, of the strain detection sensor 3, are respectively connected into a bridge and these bridges are electrically connected to an amplification circuit 41 consisting of a direct current source 42 and an amplifier 43 and an amplification circuit 44 consisting of a direct current source 45 and an amplifier 46, respectively, through an electric signal line 8. In response to the road surface frictional force acting on the wheel, shear strain is generated in the planes of the top and bottom surfaces of the stress detection sensors. The strain gauges 21-24 detect this shear strain. The amplification circuit 41 outputs a voltage signal proportional to this shear strain, that is to say the road surface frictional force. Partly because the strain gauges 21-24 form a bridge and partly because the shear strain is detected in the neighborhood of the axle centerline, the output signal cross-talks due to bending deformation and torsional deformation can be held to minimum. Similarly, shear stress is generated in the planes of the front and rear sides of the stress detection sensor in response to the vertical drag acting on the wheel. The strain gauges 31-34 detect this shear strain. The amplification circuit 44 outputs a voltage signal proportional to this shear stress, that is to say vertical drag. Partly because the strain gauges 31-34 form a bridge and partly because the shear strain is detected in the neighborhood of the axle centerline, the output signal cross-talk due to bending deformation and torsional deformation can be minimized. In this manner, a device for measuring action force of a wheel capable of measuring vertical drag with high precision is implemented. Road surface friction coefficient can be determined by inputting output signals from the amplification circuits 41 and 44 to an operational circuit 47. In the operational circuit 47 road surface frictional force value is divided by vertical drag value to obtain road surface friction coefficient.

Since the gap around the stress detection sensor 3 in the hole 2 is filled up with synthetic resin, e.g. epoxy resin, or other spacer means, an additional advantage is realized such that the strain gauges 21-24 and 31-34 are protected against the external environment.

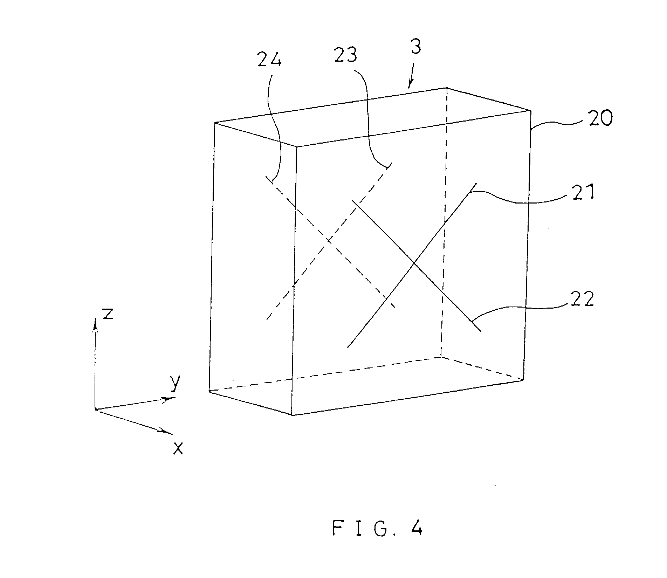

In order to measure either road surface frictional force or vertical drag, the stress detection sensor 3 illustrated in Fig. 4 can be employed in lieu of the stress detection sensor 3 of Fig. 2. Thus, each of the strain gauges 21-24 is preferably installed at an angle of 45 degrees with respect to Y-axis.

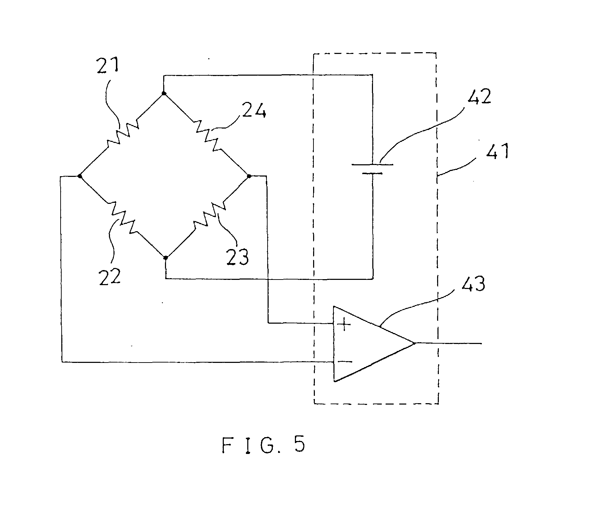

For the purpose of measuring road surface frictional force, the X, Y and Z axes in Fig. 4 are preferably coincident with a vertical direction 11, a direction of wheel advance 9 and an axle direction 10, respectively. For the purpose of measuring vertical drag, the X, Y and Z axes in Fig. 4 are preferably coincident with the direction of wheel advance 9, the axle direction 10 and the vertical direction 11. The relationship of the sensor installation position to the axle centerline is the same as the stress detection sensor shown in Fig. 2. The strain gauges 21-24 are connected to the signal processing circuit shown in Fig. 5. Thus, they are formed into a bridge which, in turn, is connected to an amplification circuit 41. This amplification circuit 41 outputs a signal corresponding to road surface frictional force or vertical drag.

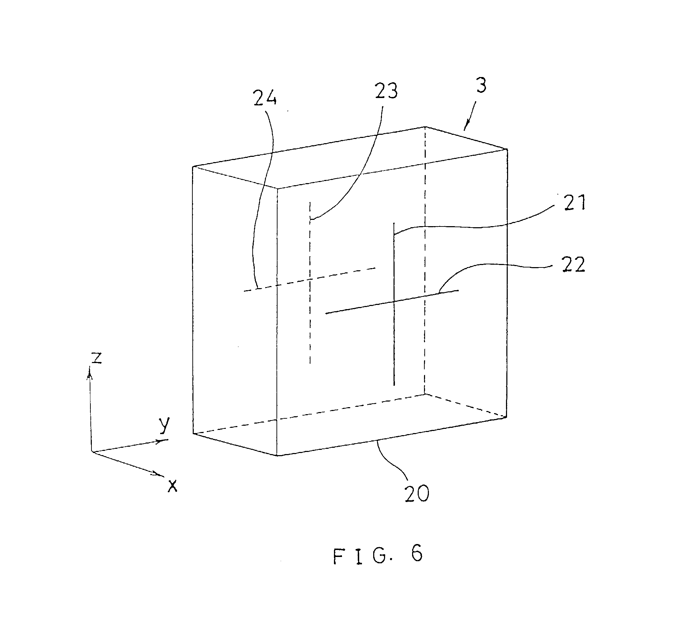

For the purpose of measuring side forces as a wheel action force, a stress detection sensor illustrated in Fig. 6 is employed and the respective strain gauges 21-24 are provided so as to be oriented along Y-axis or Z-axis as illustrated. Here, the axes X, Y and Z coincide with a direction of wheel advance 9, an axle direction 10 and a vertical direction 11 respectively, and the signal processing circuit is connected in the same manner as shown in Fig. 5.

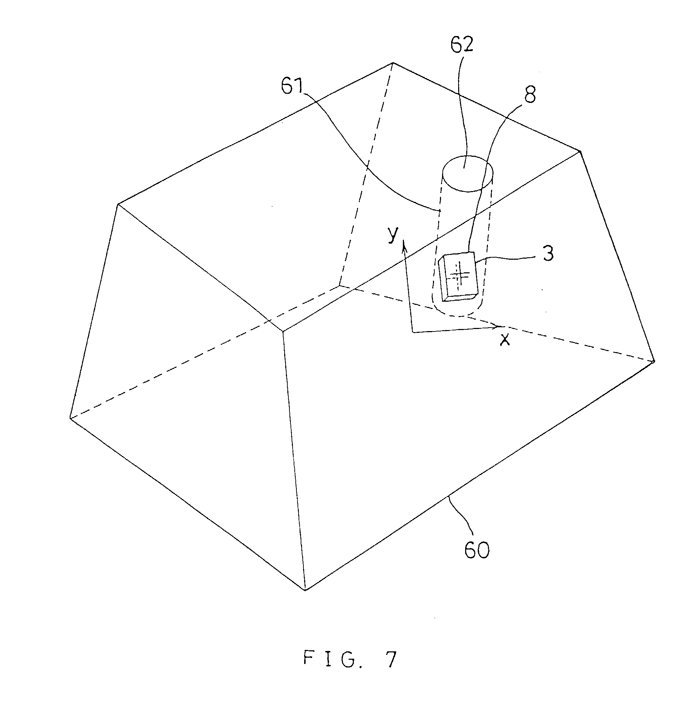

The principle of measuring various acting forces on the wheel at the axle is to detect strains produced in the axle by means of the embedded strain gauges. Therefore, by modifying the procedure of measuring forces acting on the wheel at the axle, stresses generated in any desired structures can be easily measured. An arrangement of such an application is shown in Fig. 7, which is also not part of the invention. The same stress detection sensor as shown in Fig. 6 is inserted into a hole 61 formed in a structure 60 and the gap in the hole 61 is filled up with a filler 62. This embodiment is a measuring device applicable to the case in which plane strain with main strain having a known direction is generated in the measurement part of the structure 60. As shown in the Figure, X, Y represent the directions of the main strain.

The present technology of measuring stress or load with an embedded stress detection sensor carrying strain gauges is advantageous in that by installing the stress detection sensor in a hole in a proper orientation according to a target strain or load, any stress or load can be successfully measured.

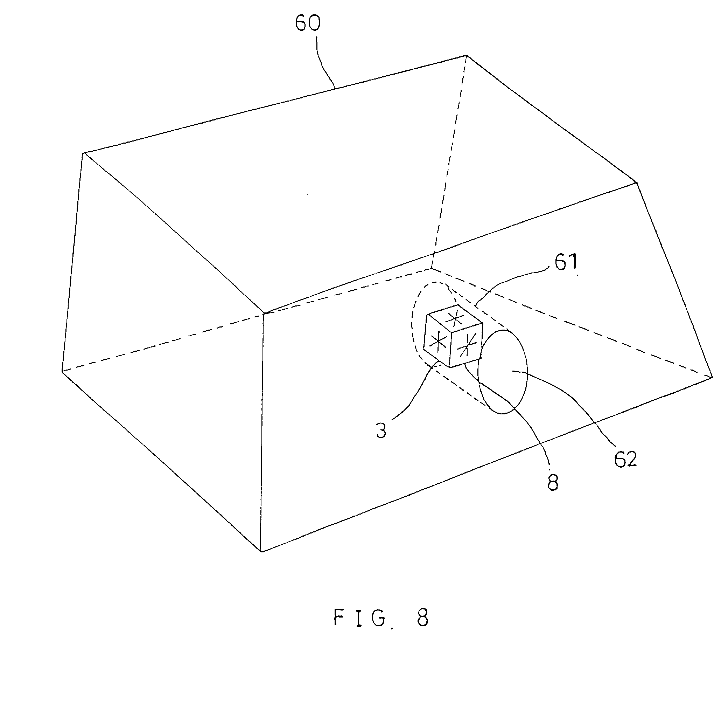

Fig. 8 shows an embodiment of the invention. The direction of main strain at the measurement part of a structure is unknown. Here, the stress detection sensor 3 illustrated in Fig. 9 is employed. The strain gauges 71-79 constitute a triaxial rosette gauge and the distribution of stress in three axial directions can be measured by a known technique using a rosette gauge.

In the device for measuring action force of a wheel illustrated in Fig. 1, the stress detection sensor 3 illustrated in Fig. 9 can be employed. By utilizing the known technique employing a rosette gauge, stress generated in the knuckle in correspondence with road surface frictional force, vertical drag and other wheel action forces can be measured. In other words, any desired wheel action forces can be measured.

## Claims

1. A device for measuring the forces acting on a vehicle wheel mounted on a vehicle axle (1), comprising:
a stress detection sensor (3) having a base (20) with strain gauges (71 - 78) secured thereto,
a hole (62) provided in the vehicle axle (1) for receiving said stress detection sensor (3), the hole (62) disposed with respect to a stress neutral line (10) of the axle so as to encompass at least a portion of the stress neutral line (10),
a signal processing circuit (41, 44) adapted to process a detection signal from said stress detection sensor (3),
characterized in that
said stress detection sensor (3) comprises a cubic plastic base (20) with strain gauges (71 - 73; 74 - 76; 77 - 79) mounted on three mutually perpendicular surfaces of the cubic plastic base (20).

2. The device of Claim 1, wherein said stress detection sensor (3) is disposed on a stress neutral line (10) of said axle (1).

3. The device of Claim 1 or 2, wherein said stress detection sensor (3) is installed and secured in said hole (2) through a spacer means, the spacer means being a material which fills the space between said stress detection sensor (3) and the walls of said hole (2).

4. The device of Claim 1 or 2, wherein said stress detection sensor (3) is installed and secured in said hole (2) through a spacer means, the spacer means being a filler (4) of the same material as the cubic plastic base (20).

5. The device of any one of the Claims 1 to 4, wherein said signal processing circuit consists of bridge circuits of said stress detection sensor (3), amplification circuits (41, 44) and an operational circuit (47).

## Patentansprüche

1. Vorrichtung zur Messung der auf ein Fahrzeugrad, das an eine Fahrzeugachse (1) montiert ist, wirkenden Kräfte, die aufweist:
einen Spannungsermittlungssensor (3) mit einer Basis (20), mit daran befestigten Dehnungsmeßstreifen (71-78),
einem Loch (62) das in der Fahrzeugachse (1) vorgesehen ist, um den Spannungsermittlungssensor (3) aufzunehmen, wobei das Loch (62) in Bezug auf eine Spannungs-neutrale Linie (10) der Achse so angeordnet ist, daß es mindestens einen Teil der Spannungs-neutralen Linie (10) umschließt, eine Signalverarbeitungsschaltung (41,44) zur Verarbeitung eines Ermittlungssignals vom Spannungsermittlungssensor (3),
dadurch gekennzeichnet,
daß der Spannungsermittlungssensor (3) eine kubische Kunststoffbasis (20) aufweist, die an drei gegenüberliegenden senkrechten Oberflächen der kubischen Kunststoffbasis (20) Dehnungsstreifen (71-73; 74-76; 77-79) montiert enthält.

2. Vorrichtung nach Anspruch 1, dadurch gekennzeichnet, daß der Spannungsermittlungssensor (3) einer Spannungs-neutralen Linie (10) der Achse (1) angeordnet ist.

3. Vorrichtung nach Anspruch 1 oder 2, dadurch gekennzeichnet, daß der Spannungsermittlungssensor (3) im Loch (2) mittels eines Abstandshalters installiert und befestigt ist, wobei der Abstandshalter ein Material ist, das den Raum zwischen dem Spannungsermittlungssensor (3) und den Wänden des Loches (2) füllt.

4. Vorrichtung nach Anspruch 1 oder 2, dadurch gekennzeichnet, daß der Spannungsermittlungssensor (3) im Loch (2) mittels eines Abstandshalters installiert und befestigt ist, wobei der Abstandshalter ein Füllstoff (4) des gleichen Materials ist wie die kubische Kunststoffbasis (20).

5. Vorrichtung nach einem der Ansprüche 1 bis 4, dadurch gekennzeichnet, daß die Signalverarbeitungsschaltung aus Brückenschaltungen des Spannungsermittlungssensors (3), Verstärkerkreisen (41,44) und einer Betriebsschaltung (47) besteht.

## Revendications

1. Dispositif pour mesurer les forces agissant sur une roue de véhicule montée sur un essieu de véhicule (1), comportant :
un capteur de détection de contrainte (3) ayant une base (20), des jauges de contrainte (71 à 78) étant fixées sur celle-ci,
un trou (62) agencé dans l'essieu (1) du véhicule pour recevoir ledit capteur de détection de contrainte (3), le trou (62) étant disposé par rapport à une ligne (10) neutre vis-à-vis des contraintes de l'essieu de manière à entourer au moins une partie de la ligne (10) neutre vis-à-vis des contraintes,
un circuit de traitement de signaux (41, 44) adapté pour traiter des signaux de détection provenant dudit capteur de détection de contrainte (3),
caractérisé en ce que
ledit capteur de détection de contrainte (3) comporte une base cubique en matière plastique (20), des jauges de contrainte (71 à 73 ; 74 à 76, 77 à 79) étant montées sur trois surfaces mutuellement perpendiculaires de la base cubique en matière plastique (20).

2. Dispositif selon la revendication 1, dans lequel ledit capteur de détection de contrainte (3) est disposé sur une ligne (10) neutre vis-à-vis des contraintes dudit essieu (1).

3. Dispositif selon la revendication 1 ou 2, dans lequel ledit capteur de détection de contrainte (3) est installé et fixé dans ledit trou (2) par l'intermédiaire de moyens formant écarteur, les moyens formant écarteur étant un matériau qui remplit l'espace existant entre ledit capteur de détection de contrainte (3) et les parois dudit trou (2).

4. Dispositif selon la revendication 1 ou 2, dans lequel ledit capteur de détection de contrainte (3) est installé et fixé dans ledit trou (2) par l'intermédiaire de moyens formant écarteur, les moyens formant écarteur étant un remplisseur (4) constitué du même matériau que la base cubique en matière plastique (20).

5. Dispositif selon l'une quelconque des revendications 1 à 4, dans lequel ledit circuit de traitement de signaux est constitué de circuits-ponts constitués dudit capteur de détection de contrainte (3), de circuits d'amplification (41, 44) et d'un circuit opérationnel (47).
